# EUROPÄISCHE PATENTSCHRIFT

(11) **EP 3 416 848 B1**
(45) Veröffentlichungstag und Bekanntmachung des Hinweises auf die Patenterteilung: **13.04.2022**
(21) Anmeldenummer: 17700269.8
(22) Anmeldetag: 09.01.2017
(51) Int. Cl.: B60K 37/06, G06F 3/041

(54) **ANORDNUNG, FORTBEWEGUNGSMITTEL UND VERFAHREN ZUR UNTERSTÜTZUNG EINES ANWENDERS BEI EINER BEDIENUNG EINER BERÜHRUNGSEMPFINDLICHEN ANZEIGEEINRICHTUNG**
ARRANGEMENT, MEANS OF LOCOMOTION AND METHOD FOR ASSISTING A USER IN THE OPERATION OF A TOUCH-SENSITIVE DISPLAY DEVICE
AGENCEMENT, MOYEN DE TRANSPORT ET PROCÉDÉ D'ASSISTANCE D'UN UTILISATEUR LORS DE L'ACTIONNEMENT D'UN DISPOSITIF D'AFFICHAGE TACTILE

(30) Priorität: 15.02.2016 DE 102016202251
(43) Veröffentlichungstag der Anmeldung: 26.12.2018
(73) Patentinhaber: Volkswagen Aktiengesellschaft, 38440 Wolfsburg (DE)
(72) Erfinder: WENGELNIK, Heino, 38442 Wolfsburg (DE); HOYER, Hans Gerd, 22763 Hamburg (DE); TRIKALIOTIS, Spiro, 39646 Oebisfelde-Weferlingen (DE); MEJIA GONZALEZ, Maria Esther, 94063 Redwood City (DE); WOJZISCHKE, Christoph, 38116 Braunschweig (DE)
(86) Internationale Anmeldenummer: PCT/EP2017/050354
(87) Internationale Veröffentlichungsnummer: WO 2017/140437

(56) Entgegenhaltungen:
- EP-A1- 1 854 678
- EP-A2- 2 960 099
- US-A1- 2008 192 024
- US-A1- 2011 296 340

## Beschreibung

### Stand der Technik

Die vorliegende Erfindung betrifft eine Anordnung, ein Fortbewegungsmittel sowie ein Verfahren zur Unterstützung eines Anwenders bei einer Bedienung einer berührungsempfindlichen Anzeigeeinrichtung. Insbesondere betrifft die vorliegende Erfindung eine sitzpositionsabhängige Hervorhebung bedienbarer Anzeigeelemente.

Der zunehmende Funktionsumfang moderner Anwenderendgeräte und Fortbewegungsmittel bedingt auch für Menü geführte Anwenderschnittstellen eine zunehmende Vielzahl angezeigter Elemente, durch welche die Übersicht und optische Erscheinung in Mitleidenschaft geraten können. Im Stand der Technik werden daher bereits Anwenderschnittstellen vorgeschlagen, welche zwischen einem "Anzeigemodus" und einem "Bedienmodus" wechseln. Im Ansprechen auf eine Erkennung einer bevorstehenden Interaktion des Anwenders mit der Schnittstelle werden zuvor für eine ansprechende und aufgeräumte Anzeige optimierte Bildschirminhalte hinsichtlich einer ergonomischeren und unmissverständlichen Bedienbarkeit modifiziert.

US 2014/0168091 A1 offenbart ein System mit einem berührungsempfindlichen Bildschirm, welcher in Abhängigkeit eines Betrachtungswinkels zeitgleich zwei unterschiedliche Anzeigeinhalte präsentieren kann.

EP 1 961 618 A2 offenbart ein Verfahren für die Zuweisung der Bedienung von Funktionen zu einem spezifischen Bediener. Hierbei wird eine Bedienung einer Anwenderschnittstelle einem spezifischen Bediener zugewiesen, sodass die Anzeige aufgeräumter ist und bspw. eine Bedienung während der Wahrnehmung einer Fahraufgabe sicherer erfolgen kann.

DE 10 2015 103 964 A1 offenbart eine Anwenderschnittstelle für ein Fortbewegungsmittel, welche in Abhängigkeit einer Sitzposition und einer Reisegeschwindigkeit eine Bedienung komplexer Funktionen ermöglicht bzw. verhindert, um das Ablenkungspotenzial für einen Fahrer aufgrund komplexer Bedienhandlungen zu verringern.

US 2008/0192024 A1 offenbart eine Anwenderbedienvorrichtung, welche imstande ist, zwischen einer Bedienung durch einen Fahrer und einer Bedienung durch einen Beifahrer zu unterscheiden. In einem Randbereich der grafischen Bedienoberfläche angeordnete Bedienelemente wechseln ihre Position an einen solchen Rand der Anzeigeeinrichtung, welcher der Position des aktuellen Bedieners nächstgelegen ist. Eine den übrigen Bildschirm ausfüllende Navigationskarte verbleibt hierbei an ihrer ursprünglichen Position und wird lediglich durch die vorgenannten Bedienelemente anteilig verdeckt.

EP 2 960 099 A2 offenbart eine Anwenderschnittstelle und ein Verfahren zum Anpassen einer Einstellung eines Fortbewegungsmittels, welche zwischen einer Bedienung durch einen Fahrer und einer Bedienung durch einen Beifahrer unterscheiden. Um eine Bedienung durch einen Anwender auf einer ersten Position zu vereinfachen, werden im Ansprechen auf eine Erkennung einer Sitzposition des aktuellen Bedieners diejenigen Bedienelemente vergrößert dargestellt, welche der Position des aktuellen Bedieners funktionell zugeordnet sind.

Ausgehend vom vorstehend identifizierten Stand der Technik ist es eine Aufgabe der vorliegenden Erfindung, eine weitergehende Unterstützung von Anwendern einer Anwenderschnittstelle zu ermöglichen.

### Offenbarung der Erfindung

Die vorstehend identifizierte Aufgabe wird erfindungsgemäß durch ein Verfahren zur Unterstützung eines Anwenders bei der Bedienung einer berührungsempfindlichen Anzeigeeinrichtung gelöst. Der Anwender kann bspw. ein Fahrer oder ein Beifahrer eines Fortbewegungsmittels sein. Die Anzeigeeinrichtung kann einen Bildschirm in einem Armaturenbrett eines Fortbewegungsmittels umfassen. Die Anzeigeeinrichtung kann auch als Bestandteil einer Drahtloskommunikationseinrichtung (z. B. Smartphone, Tablet o. ä.) ausgestaltet sein. In einer Ausgestaltung kann die Anzeigeeinrichtung als Touchscreen ausgeführt sein. In einem ersten Schritt wird ein von einer ersten Position und einer zweiten Position sichtbarer Anzeigeinhalt mittels der Anzeigeeinrichtung dargestellt. Der Anzeigeinhalt kann auch als "Bildschirminhalt" verstanden werden. Insbesondere ist also ein Einsehen des Anzeigeinhaltes sowohl von der ersten Position als auch von der zweiten Position möglich. Mit anderen Worten wird also durch die Anzeigeeinrichtung einem Betrachter an der ersten Position stets derselbe Anzeigeinhalt dargestellt wie einem Betrachter an der zweiten Position. Anschließend wird eine Annäherung des Anwenders an die Anzeigeeinrichtung erkannt. Die Annäherung kann als Verringerung eines Abstandes (insbesondere stets größer als 0 cm) zwischen dem Anwender und einer Oberfläche der Anzeigeeinrichtung verstanden werden. Diese Erkennung kann bspw. kapazitiv und/oder optisch und/oder infrarot-basiert erfolgen. Anschließend wird der Anwender als abseits der zweiten Position bezüglich der Anzeigeeinrichtung befindlich erkannt. Bspw. kann sich der Anwender auf der ersten Position befinden, während er die vorstehend beschriebene Annäherung ausführt. Die Erkennung kann bspw. durch denselben Sensor erfolgen, mittels dessen die Annäherung erkannt wird. Alternativ oder zusätzlich kann ein weiterer Sensor (in Fortbewegungsmitteln bspw. ein Sitzbelegungssensor) verwendet werden, um die Absenz des Anwenders von der zweiten Position zu erkennen. Im Ansprechen auf die Annäherung oder das Erkennen der Absenz des Anwenders bezüglich der zweiten Position wechselt ein Betriebszustand der Anzeigeeinrichtung von einem Darstellungsmodus in einen Bedienmodus, wobei zumindest ein auf der Anzeigeeinrichtung dargestelltes, der zweiten Position bezüglich der Anzeigeeinrichtung zugeordnetes Anzeigeelement des Anzeigeinhaltes optisch nicht verändert wird, sondern in einem Anzeigemodus verbleibt, obwohl für dieses Anzeigeelement ebenfalls ein Anzeigemodus und ein Bedienmodus grundsätzlich vorgesehen sind. Sofern der Wechsel vom Anzeigemodus in den Bedienmodus für das der zweiten Position zugeordnete Anzeigeelement für einen Anwender abseits der zweiten Position keine Unterstützung bedeutet, kann die vorliegende Erfindung zu einer vorteilhaften Beruhigung und optisch aufgeräumten Erscheinung der Anzeigeinhalte der Anzeigeeinrichtung beitragen. Zudem kann der Anwender auf Grundlage der vorliegenden Erfindung den Wechsel vom Anzeigemodus in den Bedienmodus als einen verbesserten Indikator zur Veranschaulichung möglicher Bedienschritte erleben. Insbesondere bei der zeitgleichen Wahrnehmung einer Fahraufgabe kann die vorliegende Erfindung somit auch zur Erhöhung der Fahrsicherheit beitragen.

Die Unteransprüche zeigen bevorzugte Weiterbildungen der Erfindung.

Die erste Position kann bspw. durch eine Sitzposition innerhalb eines Fortbewegungsmittels und/oder durch eine andere Sitzgelegenheit mit bezüglich der Anzeigeeinrichtung vordefinierter Position vordefiniert sein. Die Verwendung von Sitzpositionen ermöglicht eine einfache und robuste sensorische Erkennung der Anwenderposition.

Die Anzeigeeinrichtung kann bspw. zur Integration in eine Armaturentafel eines Fortbewegungsmittels eingerichtet sein. Mit anderen Worten handelt es sich bei der Armaturentafel um ein Element, welches durch den Fahrzeughersteller oder einen Zulieferer der Armaturentafel fest und dauerhaft verbaut wird. Die Anzeigeeinrichtung kann bspw. als zentrales Informationsdisplay (auch "CID) ausgestaltet sein. Insbesondere bei der Anwendung auf Sitzpositionen eines Fortbewegungsmittels sind eine sensorische Erkennung der Präsenz des Anwenders sowie dessen vordefinierter räumlicher Bezug zur Anzeigeeinrichtung einfach und sicher möglich.

Die Annäherung kann als Eintreten einer Hand des Anwenders in einen Raumbereich vor der Anzeigeeinrichtung verstanden werden. Mit anderen Worten ist eine Berührung einer berührungsempfindlichen/sensorisch sensiblen Oberfläche der Anzeigeeinrichtung erfindungsgemäß im Rahmen der Annäherung ausgeschlossen. Dies schließt jedoch nicht aus, dass eine anschließende Berührung der sensorisch empfindlichen Oberfläche der Anzeigeeinrichtung zur Bedienung der erfindungsgemäßen Anwenderschnittstelle im Rahmen des Bedienmodus' vorgesehen sein kann.

Das Anzeigeelement, dessen optische Erscheinung beim Wechsel vom Anzeigemodus in den Bedienmodus nicht verändert wird, kann bspw. zur Einflussnahme auf einen Parameter einer Heizung, einer Klimatisierungsfunktion, einer Sitzverstellung, einer Klangeinstellung o.ä. zugeordnet sein. Insbesondere sind solche Funktionsaufrufe vorteilhaft erfindungsgemäß behandelbar, welche für einen Anwender auf der ersten Position von Belang, für einen Anwender auf der zweiten Position jedoch ohne Belang (und umgekehrt) sind. Bspw. können ein Heizstrahler und/oder eine Sitzheizung und/oder eine Klimakomfort-Sitzfunktion (kühlender Luftstrom aus Öffnungen des Sitzbezuges) und/oder eine insassenbezogene Klimazone (Temperatur, Lüftungsintensität, Luftausströmer, lokale AUTO-Funktion) und/oder eine Armauflagenheizung und/oder Funktionen, die für den Fahrer während der Fahrt gesperrt sind; für den Beifahrer aber nicht (Bedienung langer Listen, Speller, ein komplexes Set-up, ein Handbuch) und/oder ein Ambientelicht und/oder eine Leselampe und/oder eine lokale Innenraumbeleuchtung und/oder ein Fensterheber im Wesentlichen durch denjenigen Anwender zu modifizieren sein, welcher sich auch tatsächlich auf der besagten Position befindet.

Gemäß einem zweiten Aspekt der vorliegenden Erfindung wird eine Anordnung vorgeschlagen, welche sich zur Durchführung des vorgenannten Verfahrens eignet. Die Anordnung kann Bestandteil eines Fortbewegungsmittels, eines Drahtloskommunikations-Endgerätes (Smartphone, Tablet o. ä.) oder einer anderen Anwenderschnittstelle sein. Sie umfasst eine berührungsempfindliche Anzeigeeinrichtung (Touchscreen), eine Annäherungssensorik (z. B. eine kapazitive, eine optische oder eine infrarot-basierte Sensorik) und eine Auswerteeinheit, welche einen programmierbaren Prozessor umfassen kann (z. B. ein elektronisches Steuergerät). Die Anzeigeeinrichtung ist eingerichtet, einen von einer ersten Position und einer zweiten Position sichtbaren Anzeigeinhalt darzustellen. Hierbei ist die Anzeigeeinrichtung insbesondere als im Wesentlichen blickwinkelunabhängiges Display zu verstehen, welches unabhängig von einem Blickwinkel des jeweiligen Betrachters stets denselben Anzeigeinhalt darstellt. Die Annäherungssensorik kann die Annäherung des Anwenders an die Anzeigeeinrichtung erkennen und die Absenz des Anwenders bezüglich der zweiten Position feststellen. Die Auswerteeinheit ist eingerichtet, den Betriebszustand der Anzeigeeinrichtung von einem Darstellungsmodus in einen Bedienmodus zu wechseln, wobei in Abhängigkeit der erkannten ersten Position zumindest ein auf der Anzeigeeinrichtung dargestelltes Anzeigeelement dann nicht von dem Anzeigemodus in den Bedienmodus wechselt, wenn es eine solche Funktion repräsentiert, welche für einen Anwender auf der zweiten Position keine Relevanz aufweist. Auf diese Weise verwirklicht die Anordnung dieselben Merkmale, Merkmalskombinationen und die sich aus diesen ergebenden Vorteile wie das erfindungsgemäße Verfahren, sodass zur Vermeidung von Wiederholungen auf die obigen Ausführungen verwiesen wird.

Im Betrieb kann ein Sitzbelegungssensor zur Ermittlung der Position des Anwenders mit der erfindungsgemäßen Anordnung gekoppelt sein. Diese Kopplung kann bspw. über ein Bussystem (z. B. CAN, MOST, FlexRay o. ä.) für die Informationsübertragung verwendet werden. Der Sitzbelegungssensor kann einen kapazitiven Sensor, einen optischen Sensor und/oder einen Radarsensor umfassen. Wesentlich ist lediglich, dass der Sitzbelegungssensor Aufschluss über die Präsenz eines Anwenders auf einer von ihm überwachten Sitzgelegenheit gibt. Entsprechend kann zumindest für den Fall eines negativen Sitzbelegungssignals ausgeschlossen werden, dass der Anwender sich auf dem betreffenden Sitzplatz befindet.

Gemäß einem dritten Aspekt der vorliegenden Erfindung wird ein Computerprogrammprodukt (z. B. ein Datenspeicher) vorgeschlagen, auf welchem Instruktionen gespeichert sind, die einen programmierbaren Prozessor in die Lage versetzen, die Schritte eines Verfahrens gemäß dem erstgenannten Erfindungsaspekt durchzuführen. Das Computerprogrammprodukt kann als CD, DVD, Blu-Ray Disc, Flash-Speicher, Festplatte, RAM/ROM Cash etc. ausgestaltet sein.

Gemäß einem vierten Aspekt der vorliegenden Erfindung wird eine Signalfolge repräsentierend Instruktionen vorgeschlagen, welche einen programmierbaren Prozessor in die Lage versetzen, die Schritte eines Verfahrens gemäß dem erstgenannten Erfindungsaspekt durchzuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

Gemäß einem fünften Aspekt der vorliegenden Erfindung wird ein Anwenderendgerät (insbesondere ein mobiles Drahtloskommunikationsgerät (z. B. Smartphone, Tablet etc.)) vorgeschlagen, welches eine Anordnung gemäß dem zweitgenannten Erfindungsaspekt aufweist. Die Vielzahl in gattungsgemäßen Anwenderendgeräten enthaltener Sensoren ermöglicht eine Implementierung der erfindungsgemäßen Anordnung im Wesentlichen ohne ein Erfordernis zusätzlicher Hardware.

Gemäß einem sechsten Aspekt der vorliegenden Erfindung wird ein Fortbewegungsmittel (z. B. ein Pkw, ein Transporter, ein Lkw, ein Motorrad, ein Luft- und/oder Wasserfahrzeug) vorgeschlagen, welches eine Anordnung gemäß dem zweitgenannten Erfindungsaspekt umfasst. Dabei kann die Anordnung insbesondere für den Führer des Fortbewegungsmittels und einen Sozius vorgesehen sein, und auch während der Führung des Fortbewegungsmittels die Kommunikation mit dem Fortbewegungsmittel und seinen technischen Einrichtungen ausgeführt werden. Die Merkmale, Merkmalskombinationen und die sich aus diesen ergebenden Vorteile entsprechen den in Verbindung mit dem erst- und zweitgenannten Erfindungsaspekt ausgeführten derart ersichtlich, dass zur Vermeidung von Wiederholungen auf die obigen Ausführungen verwiesen wird.

### Kurze Beschreibung der Zeichnungen

Nachfolgend werden Ausführungsbeispiele der vorliegenden Erfindung unter Bezugnahme auf die beigefügten Zeichnungen beschrieben. In den Zeichnungen zeigen:
- Figur 1: eine schematische Übersicht über Komponenten eines Ausführungsbeispiels eines erfindungsgemäßen Fortbewegungsmittels mit einem Ausführungsbeispiel einer erfindungsgemäßen Anordnung;
- Figur 2: eine Darstellung eines Anzeigeinhaltes einer erfindungsgemäßen Anordnung in einem Anzeigemodus;
- Figur 3: eine Darstellung eines Anzeigeinhaltes einer erfindungsgemäßen Anordnung in einem Bedienmodus; und
- Figur 4: ein Flussdiagramm veranschaulichend Schritte eines Ausführungsbeispiels eines erfindungsgemäßen Verfahrens.

Ausführungsformen der Erfindung

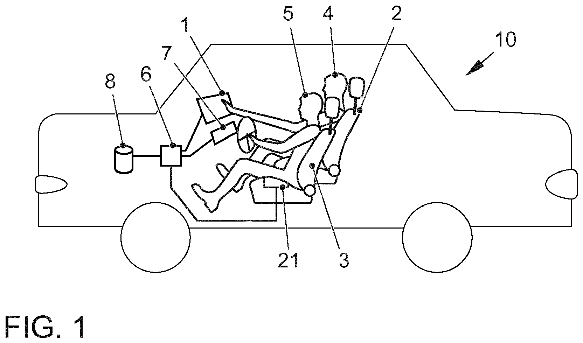

Figur 1 zeigt einen Pkw 10 als Fortbewegungsmittel, in welchem ein Fahrer 5 und ein Beifahrer 4 als Anwender auf einem Fahrersitz 3 bzw. einem Beifahrersitz 2 als erste bzw. zweite Position Platz genommen haben. Der Beifahrer 4 beabsichtigt eine Bedienung des Touchscreens 1 der dargestellten Anordnung, welche informationstechnisch mit einem elektronischen Steuergerät 6 als Auswerteeinheit verbunden ist. Zur Erkennung der Annäherung des Beifahrers 4 an den Touchscreen 1 ist eine Infrarot-LED-Leiste 7 unterhalb des Touchscreens 1 angeordnet und ebenfalls informationstechnisch mit dem elektronischen Steuergerät 6 verbunden. Ein Sitzbelegungssensor 21 teilt dem elektronischen Steuergerät 6 den Sitzbelegungsstatus des Fahrersitzes 3 sowie des Beifahrersitzes 2 mit. Ein Datenspeicher 8 ist vorgesehen,

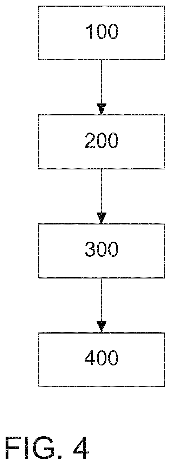

Instruktionen zur Ausführung des in Verbindung mit Figur 4 beispielhaft erläuterten Verfahrens bereitzuhalten.

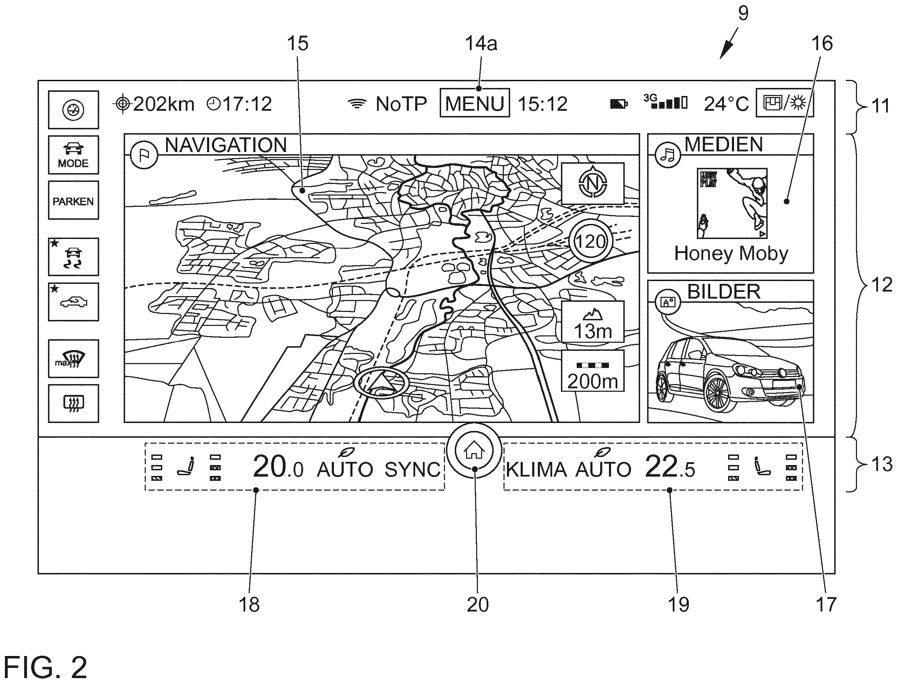

Figur 2 zeigt eine beispielhafte Darstellung eines Anzeigeinhaltes des Touchscreens 1 aus Figur 1, welche sich vollständig in einem Anzeigemodus befindet. Der Anzeigeinhalt 9 ist in eine Statusleiste 11, einen Hauptanzeigebereich 12 und einen Klimabedienbereich 13 gegliedert. Die vorgenannten Elemente sind vertikal übereinander angeordnet. Der Anzeigemodus ist hinsichtlich einer aufgeräumten und optisch ansprechenden Darstellung optimiert. Abgesehen von einer Schaltfläche 14a mit der Aufschrift "Menü" befinden sich in der Statusleiste 11 keine als zur Bedienung vorgesehen kenntlich gemachten Elemente. Der Hauptanzeigebereich 12 weist eine Kartendarstellung 15 zur Unterstützung einer Navigation und Kacheln 16, 17 für Applikationen zur Musik- und Bildwiedergabe auf. Der Klimabedienbereich weist links eines Home-Buttons 20 Schaltflächen 18 zur Einflussnahme auf Parameter einer Heiz-/Klimafunktion für die Fahrerposition und rechts des Home-Buttons 20 Schaltflächen 19 zur Einflussnahme auf Parameter einer Heiz-/Klimafunktion für die Beifahrerseite auf.

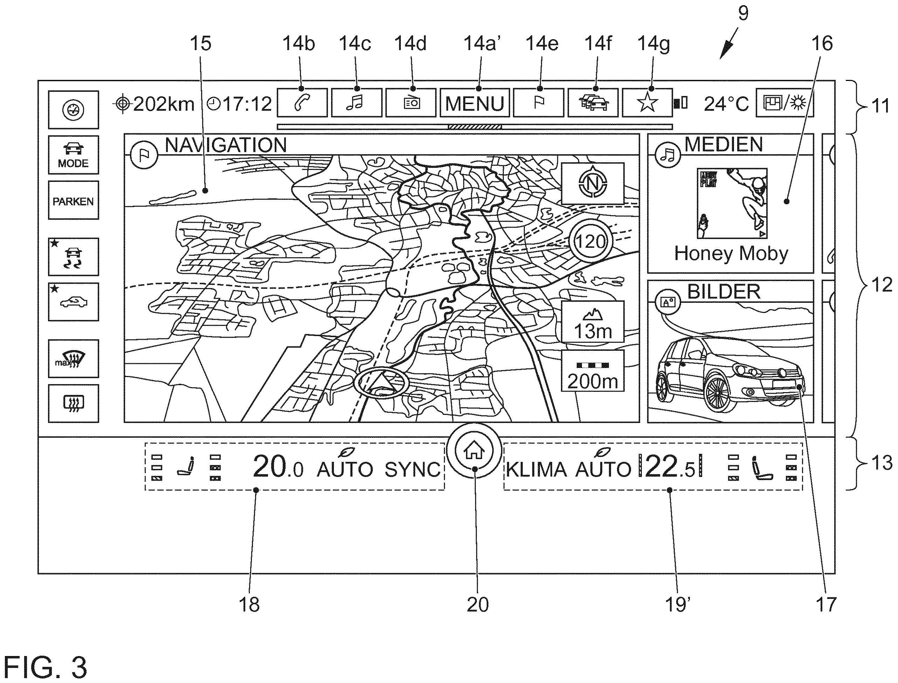

Figur 3 zeigt den in Figur 2 dargestellten Anzeigeinhalt nach einer Annäherung eines Anwenders an den Touchscreen 1 aus Figur 1 von der Beifahrerposition, im Ansprechen worauf einzelne Schaltflächen 14a', 19' optisch verändert dargestellt werden. Die Schaltfläche 14a' weist eine Korona und eine Unterstreichung auf. Zudem ist sie durch in Figur 2 nicht vorhandene weitere Schaltflächen 14b bis 14g umgeben, über welche der Anwender einen Direktzugriff auf weitere Funktionen vornehmen kann, indem er die Schaltflächen 14b bis 14g berührt. Die Schaltflächen 19' sind gegenüber den Schaltflächen 19 in Figur 2 zumindest teilweise optisch verändert dargestellt. Die Soll-Temperaturanzeige wird durch vertikale Balken gesäumt, während die Illustration des Beifahrersitzes stark vergrößert dargestellt wird. Erkennbar sind die Schaltflächen 18 für die korrespondierenden Heiz-/Klimaumfänge der Fahrerseite optisch unverändert geblieben. Der die Annäherung verursachende Anwender wird daher nicht in Versuchung geführt, Parameter der Heiz-/Klimaumfänge für die Fahrerseite zu ändern. Bereits die optisch unveränderte Darstellung von Schaltflächen, welche einem sich auf eine Position abseits der Anwenderposition beziehenden Funktionsumfang auswirken, kann dazu führen, dass für den Fahrer des Fortbewegungsmittels unerwünschte Parameteranpassungen durch den Beifahrer nicht in Betracht gezogen werden. Zusätzlich kann vorgesehen sein, dass die Schaltflächen, welche erfindungsgemäß nicht vom Anzeige- in den Bedienmodus gewechselt sind, nicht bedienbar sind bzw. keine Anpassung von Parametern ermöglichen, solange diese nicht in den Bedienmodus versetzt werden, indem der berechtigte Anwender auf sie zugreift.

Figur 4 zeigt ein Flussdiagramm veranschaulichend Schritte eines Ausführungsbeispiels eines erfindungsgemäßen Verfahrens zur Unterstützung eines Anwenders bei der Bedienung einer berührungsempfindlichen Anzeigeeinrichtung. In Schritt 100 wird ein von einer ersten Position und einer zweiten Position sichtbarer Anzeigeinhalt mittels der Anzeigeeinrichtung dargestellt. In Schritt 200 wird eine Annäherung des Anwenders an die Anzeigeeinrichtung erkannt. In Schritt 300 wird erkannt, dass sich der Anwender abseits der zweiten Position bezüglich der Anzeigeeinrichtung, nämlich auf der ersten Position, befindet. Die Reihenfolge der Schritte 200 und 300 kann umgekehrt erfolgen. Alternativ kann die Ausführung der Schritte 200 und 300 zeitgleich erfolgen. In Schritt 400 wird schließlich ein Betriebszustand der Anzeigeeinrichtung von einem Darstellungsmodus in einen Bedienmodus gewechselt, wobei in Abhängigkeit der erkannten ersten Position zumindest ein auf der Anzeigeeinrichtung dargestelltes, der zweiten Position bezüglich der Anzeigeeinrichtung zugeordnetes Anzeigeelement des Anzeigeinhaltes, für welchen ein Anzeigemodus und ein Bedienmodus vorgesehen sind, in einem Anzeigemodus verbleibt. Mit anderen Worten wechseln lediglich solche Anzeigeelemente vom Anzeigemodus in den Bedienmodus, deren zugeordnete Funktionen für einen Zugriff über die erste Position vorgesehen sind.

### Bezugszeichenliste

- 1: Touchscreen
- 2: Beifahrersitz
- 3: Fahrersitz
- 4: Beifahrer
- 5: Fahrer
- 6: elektronisches Steuergerät
- 7: Infrarot-LED-Leiste
- 8: Datenspeicher
- 9: Anzeigeinhalt
- 10: Pkw
- 11: Statusleiste
- 12: Hauptanzeigebereich
- 13: Klimabedienbereich
- 14a, 14a', 14b - 14g: Schaltflächen
- 15: Kartendarstellung
- 16, 17: Kacheln
- 18, 19, 19': Schaltflächen Klimabedienung
- 20: Home-Button
- 21: Sitzbelegungssensor
- 100 - 400: Verfahrensschritte

## Patentansprüche

1. Verfahren zur Unterstützung eines Anwenders bei der Bedienung einer berührungsempfindlichen Anzeigeeinrichtung (1) umfassend die Schritte:
- Darstellen (100) eines von einer ersten Position (2) und einer zweiten Position (3) sichtbaren Anzeigeinhaltes (9) mittels der Anzeigeeinrichtung (1)
- Erkennen (200) einer Annäherung des Anwenders (4) an die Anzeigeeinrichtung (1),
- Erkennen (300), dass sich der Anwender (4) abseits der zweiten Position (3) bezüglich der Anzeigeeinrichtung (2) befindet,
- Wechseln (400) eines Betriebszustandes der Anzeigeeinrichtung (1) von einem Darstellungsmodus in einen Bedienmodus, **dadurch gekennzeichnet, dass** zumindest ein auf der Anzeigeeinrichtung (1) dargestelltes, der zweiten Position (3) bezüglich der Anzeigeeinrichtung (1) zugeordnetes Anzeigeelement (18) des Anzeigeinhaltes (9), für welches ein Anzeigemodus und ein Bedienmodus vorgesehen sind, in einem Anzeigemodus verbleibt.

2. Verfahren nach Anspruch 1, wobei die erste Position (2) eine Sitzposition und/oder die zweite Position (3) eine Sitzposition ist bzw. sind.

3. Verfahren nach Anspruch 1 oder 2, wobei das Erkennen, dass sich der Anwender (4) abseits der zweiten Position (3) bezüglich der Anzeigeeinrichtung (1) befindet, ein Erkennen umfasst, dass sich der Anwender (4) an der ersten Position (2) bezüglich der Anzeigeeinrichtung (1) befindet.

4. Verfahren nach einem der vorstehenden Ansprüche, wobei die Anzeigeeinrichtung (1) zur Integration in eine Armaturentafel eines Fortbewegungsmittels (10) eingerichtet ist und
- die erste Position (2) eine Beifahrersitzposition und die zweite Position (3) eine Fahrersitzposition oder
- die erste Position (2) eine Fahrersitzposition und die zweite Position (3) eine Beifahrersitzposition ist.

5. Verfahren nach einem der vorstehenden Ansprüche, wobei die Annäherung durch Eintreten eines Körperteils des Anwenders (4) in einen Raumbereich, der nicht unmittelbar an die Anzeigeeinrichtung (1) angrenzt, sensorisch erkannt wird.

6. Verfahren nach einem der vorstehenden Ansprüche, wobei das Anzeigeelement (18) einem Funktionsaufruf für
- eine Heizung und/oder
- eine Klimatisierungsfunktion und/oder
- eine Sitzverstellung und/oder
- eine Klangeinstellung und/oder
- eine insassenbezogene Klimazone und/oder
- eine Armauflagenheizung und/oder
- Funktionen, die für den Fahrer während der Fahrt gesperrt sind; für den Beifahrer aber nicht und/oder
- ein Ambientelicht und/oder
- eine Leselampe und/oder
- eine lokale Innenraumbeleuchtung und/oder
- einen Fensterheber
zugeordnet ist.

7. Anordnung umfassend
- eine berührungsempfindliche Anzeigeeinrichtung (1),
- eine Annäherungssensorik (7) und
- eine Auswerteeinheit (6), wobei
- die Anzeigeeinrichtung (1) eingerichtet ist, einen von einer ersten Position (2) und einer zweiten Position (3) sichtbaren Anzeigeinhalt (9) darzustellen,
- die Annäherungssensorik (7) eingerichtet ist,
∘ eine Annäherung des Anwenders (4) an die Anzeigeeinrichtung (1) zu erkennen und
∘ zu erkennen, dass sich der Anwender (4) abseits der zweiten Position (3) bezüglich der Anzeigeeinrichtung (1) befindet, wobei
- die Auswerteeinheit (6) eingerichtet ist, einen Betriebszustand der Anzeigeeinrichtung (1) von einem Darstellungsmodus in einen Bedienmodus zu wechseln, **dadurch gekennzeichnet, dass** zumindest ein auf der Anzeigeeinrichtung (1) dargestelltes, einer zweiten Position (3) bezüglich der Anzeigeeinrichtung (1) zugeordnetes Anzeigeelement (18) des Anzeigeinhaltes (9), für welches ein Anzeigemodus und ein Bedienmodus vorgesehen sind, in einem Anzeigemodus verbleibt.

8. Anordnung nach Anspruch 7, welche eingerichtet ist, ein Verfahren nach einem der vorstehenden Ansprüche 1 bis 6 auszuführen.

9. Anordnung nach Anspruch 7 oder 8, welche mit einem Sitzbelegungssensor (21) zur Ermittlung der Position des Anwenders (4) gekoppelt ist.

10. Anordnung nach Anspruch 9, wobei der Sitzbelegungssensor (21)
- einen kapazitiven Sensor und/oder
- einen optischen Sensor und/oder
- einen Radarsensor
umfasst.

11. Computerprogrammprodukt umfassend Instruktionen, welche, wenn Sie auf einer programmierbaren Auswerteeinheit (6) einer Anordnung nach einem der Ansprüche 7 bis 10 ausgeführt werden, die Auswerteeinheit (6) veranlassen, die Schritte eines Verfahrens nach einem der Ansprüche 1 bis 6 durchzuführen.

12. Signalfolge repräsentierend Instruktionen, welche, wenn Sie auf einer programmierbaren Auswerteeinheit (6) einer Anordnung nach einem der Ansprüche 7 bis 10 ausgeführt werden, die Auswerteeinheit (6) veranlassen, die Schritte eines Verfahrens nach einem der Ansprüche 1 bis 6 durchzuführen.

13. Anwenderendgerät, insbesondere mobiles Drahtloskommunikationsgerät umfassend eine Anordnung nach einem der Ansprüche 7 bis 10.

14. Fortbewegungsmittel (10) umfassend eine Anordnung nach einem der Ansprüche 7 bis 10.

## Claims

1. Method for assisting a user in operating a touch-sensitive display device (1), comprising the steps of:
- presenting (100) a display content (9), which is visible from a first position (2) and from a second position (3), by means of the display device (1),
- detecting (200) an approach to the display device (1) by the user (4),
- detecting (300) that the user (4) is located away from the second position (3) with respect to the display device (2),
- changing (400) an operating state of the display device (1) from a presentation mode to an operating mode, **characterized in that**, of the display content (9), at least one display element (18) that is presented on the display device (1), is assigned to the second position (3) with respect to the display device (1) and for which a display mode and an operating mode are provided remains in a display mode.

2. Method according to Claim 1, wherein the first position (2) is a seating position and/or the second position (3) is a seating position.

3. Method according to Claim 1 or 2, wherein the detection that the user (4) is located away from the second position (3) with respect to the display device (1) comprises a detection that the user (4) is located at the first position (2) with respect to the display device (1).

4. Method according to one of the preceding claims, wherein the display device (1) is configured for being integrated into an instrument panel of a means of transport (10) and
- the first position (2) is a front passenger seating position and the second position (3) is a driver seating position or
- the first position (2) is a driver seating position and the second position (3) is a front passenger seating position.

5. Method according to one of the preceding claims, wherein the approach due to a body part of the user (4) entering a spatial region that is not immediately adjacent to the display device (1) is detected by a sensor system.

6. Method according to one of the preceding claims, wherein the display element (18) is assigned to a function call for
- heating and/or
- an air-conditioning function and/or
- a seat adjustment and/or
- a sound setting and/or
- a passenger-related climate zone and/or
- arm-rest heating and/or
- functions that the driver is blocked from using during the journey but not the front passenger and/or
- ambience lighting and/or
- a reading lamp and/or
- local interior illumination and/or
- a window regulator.

7. Arrangement comprising
- a touch-sensitive display device (1),
- a proximity sensor system (7) and
- an evaluation unit (6), wherein
- the display device (1) is configured to present a display content (9) that is visible from a first position (2) and from a second position (3),
- the proximity sensor system (7) is configured to
o detect an approach to the display device (1) by the user (4) and
o detect that the user (4) is located away from the second position (3) with respect to the display device (1), wherein
- the evaluation unit (6) is configured to change an operating state of the display device (1) from a presentation mode to an operating mode, **characterized in that**, of the display content (9), at least one display element (18) that is presented on the display device (1), is assigned to a second position (3) with respect to the display device (1) and for which a display mode and an operating mode are provided remains in a display mode.

8. Arrangement according to Claim 7, which is configured to carry out a method according to one of the preceding Claims 1 to 6.

9. Arrangement according to Claim 7 or 8, which is coupled to a seat occupancy sensor (21) for ascertaining the position of the user (4).

10. Arrangement according to Claim 9, wherein the seat occupancy sensor (21) comprises
- a capacitive sensor and/or
- an optical sensor and/or
- a radar sensor.

11. Computer program product comprising instructions which, when they are executed on a programmable evaluation unit (6) of an arrangement according to one of Claims 7 to 10, cause the evaluation unit (6) to perform the steps of a method according to one of Claims 1 to 6.

12. Signal sequence representing instructions which, when they are executed on a programmable evaluation unit (6) of an arrangement according to one of Claims 7 to 10, cause the evaluation unit (6) to perform the steps of a method according to one of Claims 1 to 6.

13. User terminal, in particular mobile wireless communication device, comprising an arrangement according to one of Claims 7 to 10.

14. Means of transport (10) comprising an arrangement according to one of Claims 7 to 10.

## Revendications

1. Procédé d'assistance à un utilisateur pour faire fonctionner un dispositif d'affichage tactile (1), le procédé comprenant les étapes suivantes :
- présenter (100) un contenu d'affichage (9), visible depuis une première position (2) et une deuxième position (3), au moyen du dispositif d'affichage (1),
- détecter (200) que l'utilisateur (4) s'approche du dispositif d'affichage (1),
- détecter (300) que l'utilisateur (4) est à l'écart de la deuxième position (3) par rapport au dispositif d'affichage (2),
- faire passer (400) un état de fonctionnement du dispositif d'affichage (1) d'un mode de présentation à un mode d'élément de fonctionnement, **caractérisé en ce qu'**au moins un élément d'affichage (18) du contenu d'affichage (9) reste dans un mode d'affichage, lequel élément d'affichage est représenté sur le dispositif d'affichage (1) et est associé à la deuxième position (3) par rapport au dispositif d'affichage (1) et élément d'affichage pour lequel un mode d'affichage et un mode de fonctionnement sont prévus.

2. Procédé selon la revendication 1, la première position (2) étant une position de siège et/ou la deuxième position (3) étant une position de siège.

3. Procédé selon la revendication 1 ou 2, l'opération de détection que l'utilisateur (4) est à l'écart de la deuxième position (3) par rapport au dispositif d'affichage (1) comprend une opération de détection que l'utilisateur (4) est à la première position (2) par rapport au dispositif d'affichage (1).

4. Procédé selon l'une des revendications précédentes, le dispositif d'affichage (1) étant adapté pour être intégré dans un pupitre de conduite d'un moyen de transport (10) et
- la première position (2) étant une position de siège de passager et la deuxième position (3) étant une position de siège de conducteur ou
- la première position (2) étant une position de siège de conducteur et la deuxième position (3) étant une position de siège de passager.

5. Procédé selon l'une des revendications précédentes, l'approche par entrée d'une partie du corps de l'utilisateur (4) dans une zone d'espace, qui n'est pas directement adjacente au dispositif d'affichage (1), est détectée par des capteurs.

6. Procédé selon l'une des revendications précédentes, l'élément d'affichage (18) étant associé à un appel de fonction pour
- un radiateur et/ou
- une fonction de climatisation et/ou
- un réglage de siège et/ou
- un réglage sonore et/ou
- une zone de climatisation liée à l'occupant et/ou
- un chauffage d'accoudoir et/ou
- des fonctions qui sont bloquées pendant la conduite pour le conducteur ; mais pas pour le passager et/ou
- une lumière ambiante et/ou
- une lampe de lecture et/ou
- un éclairage d'espace intérieur local et/ou
- un lève-vitre.

7. Ensemble comprenant
- un dispositif d'affichage tactile (1),
- un capteur de proximité (7) et
- une unité d'évaluation (6),
- le dispositif d'affichage (1) étant adapté pour présenter un contenu d'affichage (9) visible depuis une première position (2) et une deuxième position (3),
- le système de capteur de proximité (7) étant adapté
∘ pour détecter que l'utilisateur (4) s'approche du dispositif d'affichage (1) et
∘ détecter que l'utilisateur (4) est à l'écart de la deuxième position (3) par rapport au dispositif d'affichage (1),
- l'unité d'évaluation (6) étant adaptée pour faire passer un état de fonctionnement du dispositif d'affichage (1) d'un mode d'affichage à un mode de fonctionnement, **caractérisé en ce qu'**au moins un élément d'affichage (18) du contenu d'affichage (9) reste dans un mode d'affichage, lequel élément d'affichage est représenté sur le dispositif d'affichage (1) et est associé à la deuxième position (3) par rapport au dispositif d'affichage (1) et élément d'affichage pour lequel un mode d'affichage et un mode de fonctionnement sont prévus.

8. Ensemble selon la revendication 7, qui est adapté pour mettre en œuvre un procédé selon l'une des revendications précédentes 1 à 6.

9. Ensemble selon la revendication 7 ou 8, qui est couplé à un capteur d'occupation de siège (21) pour déterminer la position de l'utilisateur (4).

10. Ensemble selon la revendication 9, le capteur d'occupation de siège (21) comprenant
- un capteur capacitif et/ou
- un capteur optique et/ou
- un capteur radar.

11. Progiciel comprenant des instructions qui, lorsqu'elles sont exécutées sur une unité d'évaluation programmable (6) d'un ensemble selon l'une des revendications 7 à 10, amènent l'unité d'évaluation (6) à exécuter les étapes d'un procédé selon l'une des revendications 1 à 6.

12. Séquence de signaux représentant des instructions qui, lorsqu'elles sont exécutées sur une unité d'évaluation programmable (6) d'un ensemble selon l'une des revendications 7 à 10, amènent l'unité d'évaluation (6) à exécuter les étapes d'un procédé selon l'une des revendications 1 à 6.

13. Terminal utilisateur, notamment dispositif de communication mobile sans fil comprenant un ensemble selon l'une des revendications 7 à 10.

14. Moyen de transport (10) comprenant un ensemble selon l'une des revendications 7 à 10.
